# EUROPEAN PATENT APPLICATION

(11) **EP 4 362 180 A1**
(43) Date of publication of application: **01.05.2024**
(21) Application number: 23164901.3
(22) Date of filing: 29.03.2023
(51) Int. Cl.: H01M 50/133, H01M 50/202, H01M 50/207, H01M 50/342, H01M 50/358

(54) **BATTERY AND BATTERY PACK**

(30) Priority: 26.10.2022 CN 202211320382
(71) Applicant: CALB Group Co., Ltd., Changzhou City, Jiangsu Province (CN)
(72) Inventor: ZHANG, Yongjie, Changzhou City (CN); XU, Jiuling, Changzhou City (CN); ZHANG, Lulu, Changzhou City (CN)
(74) Representative: Becker, Eberhard

(57) **Abstract**

A battery and a battery pack are provided. The battery includes a battery case (10) and a fixed structure (20). The fixed structure (20) is disposed on an outer side of the battery case (10), and a side of the fixed structure (20) facing the battery case (10) is provided with a protruding portion (21), such that when the battery swells, the protruding portion (21) can contact the battery case (10), so that the battery case (10) releases internal gas.

## Description

### BACKGROUND

### Technical Field

The disclosure relates to the technical field of batteries, in particular to a battery and a battery pack.

### Description of Related Art

In the related technology, after the battery is used for a long time, the battery may experience thermal runaway, and the internal gas of the battery needs to be discharged in time through the explosion-proof valve. Due to the structural limitation of the explosion-proof valve, there may be an issue that the explosion-proof valve does not burst open in time.

### SUMMARY

According to a first aspect of the disclosure, there is provided a battery, including a battery case and a fixed structure.

The fixed structure being disposed on an outer side of the battery case, a side of the fixed structure facing the battery case being provided with a protruding portion, such that when the battery swells, the protruding portion can contact the battery case, so that the battery case releases internal gas.

According to a second aspect of the disclosure, there is provided a battery pack, including the battery.

According to a third aspect of the disclosure, there is provided a battery pack, including a battery and an external structure.

The battery includes a battery case, and the battery case is provided with a weak portion.

The external structure is provided with a protruding portion, such that when the battery swells, the protruding portion contacts the weak portion, so that the battery case bursts open from the weak portion.

### BRIEF DESCRIPTION OF THE DRAWINGS

For a better understanding of the disclosure, reference may be made to exemplary embodiments shown in the following drawings. The components in the drawings are not necessarily to scale and related elements may be omitted, or in some instances proportions may have been exaggerated, so as to emphasize and clearly illustrate the features described herein. In addition, related elements or components can be variously arranged, as known in the art. Further, in the drawings, like reference numerals designate same or like parts throughout the several views.
FIG. 1 is a schematic diagram of a partial structural of a battery according to an exemplary embodiment.
FIG. 2 is a schematic diagram of an exploded structure of a battery according to an exemplary embodiment.
FIG. 3 is a schematic diagram of a structure of a battery pack according to an exemplary embodiment.

### DETAILED DESCRIPTION OF DISCLOSED EMBODIMENTS

The technical solutions in the exemplary embodiments of the disclosure will be described clearly and explicitly in conjunction with the drawings in the exemplary embodiments of the disclosure. The description proposed herein is just the exemplary embodiments for the purpose of illustrations only, not intended to limit the scope of the disclosure, so it should be understood that and various modifications and variations could be made thereto without departing from the scope of the disclosure.

In the description of the present disclosure, unless otherwise specifically defined and limited, the terms "first", "second" and the like are only used for illustrative purposes and are not to be construed as expressing or implying a relative importance. The term "plurality" is two or more. The term "and/or" includes any and all combinations of one or more of the associated listed items.

In particular, a reference to "the" object or "a" and "an" object is intended to denote also one of a possible plurality of such objects. Unless otherwise defined or described, the terms "connect", "fix" should be broadly interpreted, for example, the term "connect" can be "fixedly connect", "detachably connect", "integrally connect", "electrically connect" or "signal connect". The term "connect" also can be "directly connect" or "indirectly connect via a medium". For the persons skilled in the art, the specific meanings of the abovementioned terms in the present disclosure can be understood according to the specific situation.

Further, in the description of the present disclosure, it should be understood that spatially relative terms, such as "above", "below" "inside", "outside" and the like, are described based on orientations illustrated in the figures, but are not intended to limit the exemplary embodiments of the present disclosure.

In the context, it should also be understood that when an element or features is provided "outside" or "inside" of another element(s), it can be directly provided "outside" or "inside" of the other element, or be indirectly provided "outside" or "inside" of the another element(s) by an intermediate element.

The disclosure provides a battery and a battery pack to improve the service performance of the battery.

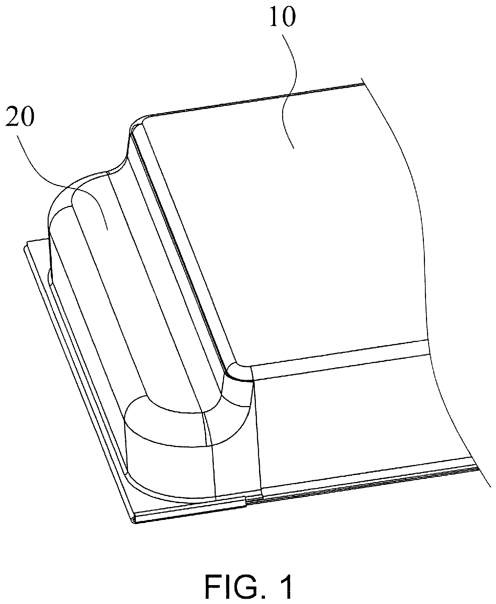

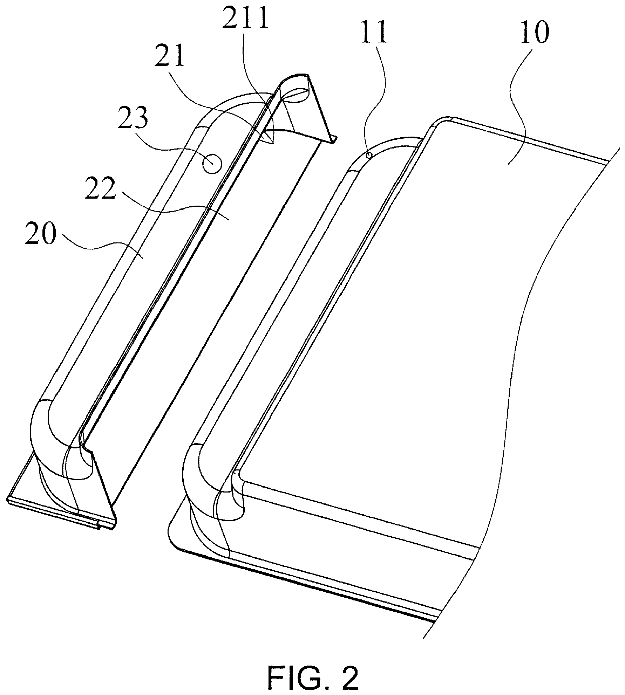

An embodiment of the disclosure provides a battery. Please refer to FIG. 1 and FIG. 2. The battery includes a battery case 10 and a fixed structure 20. The fixed structure 20 is disposed on an outer side of the battery case 10, and a side of the fixed structure 20 facing the battery case 10 is provided with a protruding portion 21, such that when the battery swells, the protruding portion 21 can contact the battery case 10, so that the battery case 10 releases internal gas.

The battery of an embodiment of the disclosure includes the battery case 10 and the fixed structure 20. The fixed structure 20 is disposed on the outer side of the battery case 10 to implement the insulation protection of the battery case 10. Through disposing the protruding portion 21 on the side of the fixed structure 20 facing the battery case 10, when the battery swells, the protruding portion 21 can contact the battery case 10 and deform the battery case 10, thereby causing the battery case 10 to burst open to release the internal gas of the battery case 10, thereby implementing the pressure release of the battery in time, so as to improve the safe use performance of the battery.

It should be noted that during the charging/discharging process, the internal temperature of the battery is too high, and the battery swells. If the battery case 10 does not burst open in time to discharge gas in time, safety issues may occur. However, in the embodiment, through disposing the protruding portion 21 on the side of the fixed structure 20 facing the battery case 10, the protruding portion 21 can contact the battery case 10, so that the protruding portion 21 can deform the battery case 10 during the swelling process of the battery, and finally cause the battery case 10 to burst open, so as to release the internal gas of the battery case 10.

When the fixed structure 20 is assembled on the battery case 10, the protruding portion 21 of the fixed structure 20 may contact the battery case 10. At this time, the protruding portion 21 is not enough to deform the battery case 10, let alone cause the battery case 10 to burst open. During the charging/discharging process of the battery, the temperature of the battery rises, and when the internal pressure of the battery case 10 reaches a certain level, the protruding portion 21 causes the battery case 10 to deform, and finally causes the battery case 10 to burst open.

Alternatively, when the fixed structure 20 is assembled on the battery case 10, there may be a gap between the protruding portion 21 of the fixed structure 20 and the battery case 10. During the charging/discharging process of the battery, the temperature of the battery rises, the battery case 10 swells, the protruding portion 21 may contact the battery case 10, and when the internal pressure of the battery case 10 reaches a certain level, the protruding portion 21 causes the battery case 10 to deform, and finally causes the battery case 10 to burst open.

During the deformation process of the battery case 10, the protruding portion 21 may pierce the battery case 10 or during the process of the protruding portion 21 causing the battery case 10 to deform, the battery case 10 bursts open under the action of internal pressure, so as to implement the discharge of the internal gas.

In an embodiment, at least part of the fixed structure 20 is an insulating member, so as to ensure reliable insulation between the fixed structure 20 and the battery case 10, thereby improving the safe use performance of the battery.

The fixed structure 20 may be a plastic structure, the fixed structure 20 may be a rubber structure, or the fixed structure 20 may be a metal member. An outer side of the metal member may be coated with an insulating coating. For example, the insulating coating may be a ceramic coating, such as alumina (Al₂O₃) and zirconia (ZrO₂).

In an embodiment, as shown in FIG. 2, the battery case 10 is provided with a weak portion 11, and the protruding portion 21 is disposed facing the weak portion 11, so that the protruding portion 21 can contact the weak portion 11 and cause the battery case 10 to burst open from the weak portion 11, so that the internal gas of the battery can be released in time, so as to prevent safety issues of the battery.

When the internal pressure of the battery reaches a certain level, the battery case 10 swells, and the protruding portion 21 can contact the weak portion 11, and finally cause the battery case 10 to burst open from the weak portion 11, thereby implementing the discharge of gas in time. The combination of the weak portion 11 and the protruding portion 21 can ensure that the battery case 10 bursts open in time under a specific pressure to prevent the issue of the battery case 10 not bursting in time, so as to reliably improve the safe use performance of the battery.

It should be noted that the weak portion 11 may be of a relatively low material strength or the weak portion 11 may be of a relatively thin thickness, which is not limited herein.

In an embodiment, as shown in FIG. 2, the protruding portion 21 includes a free end 211 away from the fixed structure 20. The free end 211 can contact the weak portion 11 and can pierce the weak portion 11, such that when the internal pressure of the battery case 10 reaches a certain level, the battery case 10 is deformed, so that the free end 211 pierces the weak portion 11, so as to release the internal gas of the battery case 10 in time to prevent safety issues of the battery.

During the deformation process of the battery case 10, since the protruding portion 21 abuts the weak portion 11, the weak portion 11 is greatly deformed, that is, the force on the weak portion 11 is greater, so that the weak portion 11 is pierced. After the weak portion 11 is pierced, the weak portion 11 may also gradually increase the area of the pierced opening, thereby implementing the quick discharge of gas.

In an embodiment, at least part of the protruding portion 21 is a shrunken section. The shrunken section gradually shrinks from a side away from the free end 211 toward the free end 211, so that the free end 211 forms a relatively sharp end portion. When the internal pressure of the battery case 10 reaches a certain level, the free end 211 can pierce the weak portion 11 in time, thereby implementing the discharge of gas in time.

At least part of the protruding portion 21 is the shrunken section. The shrunken section gradually shrinks from the side away from the free end 211 toward the free end 211. The shrunken section may be a conical structure, and a conical head of the conical structure may contact the battery case 10, thereby piercing the battery case 10, so as to implement the pressure release of the battery in time to ensure the safe use performance of the battery.

In an embodiment, at least part of the battery case 10 and the weak portion 11 are integrally formed, which not only has a simple structure, but also reduces the manufacturing procedure, thereby improving the forming efficiency of the battery, and further preventing separately configuring a similar explosion-proof structure that increases the production cost of the battery.

The weak portion 11 and at least part of the battery case 10 are integrally formed. For example, a part of the battery case 10 may be thinned, thereby forming the weak portion 11. Alternatively, the battery case 10 may be partially thinned during the forming process, thereby serving as the weak portion 11, so as to implement the pressure release function, and the process is relatively simple, so that the forming efficiency of the weak portion 11 can be improved.

In some embodiments, it is not excluded that the weak portion 11 is a structure independent of the battery case 10, for example, the weak portion 11 may be an explosion-proof valve in the related art. The explosion-proof valve may be connected to the battery case 10.

In an embodiment, the minimum distance between the protruding portion 21 and the battery case 10 is not greater than 10 mm, so that when the battery case 10 swells, the protruding portion 21 can contact the battery case 10 to ensure that the battery case 10 can burst open under a preset pressure, thereby implementing efficient pressure release to ensure the safe use performance of the battery.

The minimum distance between the protruding portion 21 and the battery case 10 may be 0 to 10 mm. The minimum distance between the protruding portion 21 and the battery case 10 may be 0, 0.1 mm, 0.2 mm, 0.5 mm, 1 mm, 1.5 mm, 2 mm, 2.5 mm, 3 mm, 3.5 mm, 4 mm, 4.5 mm, 5 mm, 5.5 mm, 6 mm, 6.5 mm, 7 mm, 7.5 mm, 8 mm, 8.5 mm, 9 mm, 9.5 mm, 9.8 mm, 9.9 mm, 10 mm, etc.

In an embodiment, the protruding portion 21 is disposed facing a corner region of the battery case 10, so that the battery case 10 can burst open from the corner region, which not only facilitates the reliable bursting of the battery case 10, but also improves the discharge efficiency of gas, and may further reduce the probability of liquid or gas from the battery case 10 spraying to other batteries, thereby improving the safety performance of the battery.

It should be noted that the corner region of the battery case 10 may be a corner position of each surface of the battery case 10. Alternatively, the corner region of the battery case 10 may be a transition region between the surfaces of the battery case 10. For example, the battery case 10 may include two opposite large surfaces and four small surfaces disposed surrounding the two large surfaces. The transition region between the large surface and the small surface may be the corner position of the battery case 10. Alternatively, an end portion of the battery case 10 may be provided with a recess, and a transition region between wall surfaces of the recess may be the corner position of the battery case 10, and a transition region between the wall surface of the recess and the surface of the battery case 10 may be the corner position of the battery case 10.

In an embodiment, at least part of the thickness of the battery case 10 at the corner region is less than the thickness of the battery case 10 other than the corner region, so that the corner region of the battery case 10 can be used as a contact position with the protruding portion 21, such that the corner region may burst open in time when the internal pressure of the battery case 10 reaches a certain value, thereby ensuring the safe use performance of the battery.

The thinning of the corner region of the battery case 10 is implemented during the forming process of the battery case 10. For example, the battery case 10 is stamped to implement material thinning or the battery case 10 is stamped to form the recess to implement material thinning. Of course, the thinning through material removal is not excluded.

In an embodiment, the thickness of the battery case 10 is not greater than 0.5 mm, so that the weight of the battery case 10 may be reduced, so as to increase the energy density of the battery.

The thickness of the battery case 10 may be 0.1 mm to 0.5 mm. The thickness of the battery case 10 may be 0.1 mm, 0.15 mm, 0.2 mm, 0.25 mm, 0.3 mm, 0.35 mm, 0.4 mm, 0.45 mm, 0.5mm, etc.

In an embodiment, the battery case 10 may include a first case member and a second case member. The second case member is connected to the first case member to seal a cell, wherein the first case member may be a flat plate and the second case member may be formed with an accommodating cavity or the first case member and the second case member may be both formed with an accommodating cavity.

In an embodiment, the material of the battery case 10 may be stainless steel or aluminum, which has good corrosion resistance and sufficient strength. The battery case 10 is substantially rectangular.

It should be noted that the first case member and the second case member may be independently disposed. In some embodiments, it is not excluded that the first case member and the second case member may be an integral structure, and a space for accommodating the cell is formed through stamping, and is subsequently sealed and connected by welding.

The battery includes the cell and an electrolyte, and is the smallest unit capable of performing electrochemical reactions such as charging/discharging. The cell refers to a unit formed by winding or laminating a stack portion. The stack portion includes a first electrode, a separator, and a second electrode. When the first electrode is a positive electrode, the second electrode is a negative electrode. The polarities of the first electrode and the second electrode may be interchanged.

The battery is a stacked battery, which is not only convenient for grouping, but also can be processed to obtain a battery with a longer length. Specifically, the cell is a stacked cell. The cell has a first pole piece, a second pole piece electrically opposite to the first pole piece, and a diaphragm piece disposed between the first pole piece and the second pole piece that are stacked on each other, so that multiple pairs of the first pole pieces and the second pole pieces are stacked to form the stacked cell.

Optionally, the battery may be a winding battery, that is, the first pole piece, the second pole piece electrically opposite to the first pole piece, and the diaphragm piece disposed between the first pole piece and the second pole piece are wound to obtain the winding battery.

In an embodiment, the battery may further include a pole assembly. The pole assembly may be disposed on the battery case 10, and the pole assembly may be electrically connected to the cell.

In an embodiment, as shown in FIG. 2, the fixed structure 20 is an insulating cover, the fixed structure 20 includes an accommodating cavity 22, the protruding portion 21 is located in the accommodating cavity 22, and an end of the battery case 10 is located in the accommodating cavity 22, so that the fixed structure 20 can reliably protect the battery case 10 to improve the insulating protection performance of the battery case 10.

The fixed structure 20 may include an elastic member, so that the fixed structure 20 can be reliably covered on the battery case 10, and the connection strength between the fixed structure 20 and the battery case 10 can be improved.

It should be noted that the fixed structure 20 may be entirely sleeved on the battery case 10. For example, the fixed structure 20 may cover the entire battery case 10 or the fixed structure 20 may cover only a part of the battery case 10. For example, the fixed structure 20 may cover only an end portion of the battery case 10.

In an embodiment, the fixed structure 20 further includes a flow channel 23. The flow channel 23 is communicated with the accommodating cavity 22, and the flow channel 23 is used to release gas discharged from the battery case 10, thereby improving the heat dissipation performance of the battery to prevent safety issues from occurring.

The protruding portion 21 on the fixed structure 20 enables gas to be discharged from the battery case 10 in time after the battery case 10 bursts open. At this time, through disposing the flow channel 23 on the fixed structure 20, gas may be discharged from the fixed structure 20 along the flow channel 23, so that high-temperature gas can be quickly discharged, thereby ensuring the safety performance of the battery.

In an embodiment, an inner wall of the accommodating cavity 22 may be provided with an inwardly recessed flow channel 23. The flow channel may intersect with an end surface of the fixed structure 20, so that airflow may be discharged from the accommodating cavity 22 along the flow channel 23.

In an embodiment, as shown in FIG. 2, the flow channel 23 runs through the battery case 10, so that gas in the accommodating cavity 22 can be quickly discharged, so as to improve the heat dissipation performance of the battery.

The flow channel 23 running through the battery case 10 is a through hole. The through hole may be a round hole, a polygonal hole, or other types of holes, which is not limited here.

It should be noted that the fixed structure 20 may be provided with one or more protruding portions 21.

The battery may be a square battery, that is, the battery may be a square prism battery. The square prism battery mainly refers to the shape of a prism, but is not strictly limited whether each side of the prism must be a straight line in the strict sense. A corner between the sides may not be a right angle and may be an arced transition. In some embodiments, it is not excluded that the battery may be a cylindrical battery.

In an embodiment, the length of the battery is a, 400 mm≤a≤2800 mm, the width of the battery is b, the height of the battery is c, 2b≤a≤80b and/or 0.5c≤b≤20c.

Further, 80 mm≤b≤200 mm, 10 mm≤c≤100 mm.

Preferably, 4b≤a≤25b and/or 2c≤b≤10c.

In the battery in the above embodiment, under the situation of ensuring sufficient energy density, the ratio of the length to the width of the battery is greater. Further, the ratio of the width to the height of the battery is greater.

In an embodiment, the length of the battery is a, the width of the battery is b, 4b≤a≤7b, that is, the ratio of the length to the width of the battery in the embodiment is greater, so as to increase the energy density of the battery and facilitate subsequent forming of a battery pack.

In an embodiment, the height of the battery is c, 3c≤b≤7c, and the ratio of the width to the height of the battery is greater, so as to facilitate forming while ensuring sufficient energy density.

Optionally, the length of the battery may be 800 mm to 1800 mm, the width of the battery may be 80 mm to 180 mm, and the height of the battery may be 15 mm to 35 mm.

It should be noted that the length of the battery is the size of the battery in the length direction, the width of the battery is the size of the battery in the width direction, and the height of the battery is the size of the battery in the height direction, that is, the thickness of the battery.

An embodiment of the disclosure also provides a battery pack, including the battery.

The battery pack of an embodiment of the disclosure includes a battery. The battery includes the battery case 10 and the fixed structure 20. The fixed structure 20 is disposed on the outer side of the battery case 10 to implement the insulation protection of the battery case 10. Through disposing the protruding portion 21 on the side of the fixed structure 20 facing the battery case 10, when the battery swells, the protruding portion 21 can contact the battery case 10 and deform the battery case 10, thereby causing the battery case 10 to burst open to release the internal gas of the battery case 10, thereby implementing the pressure release of the battery in time, so as to improve the safe use performance of the battery.

In an embodiment, the battery pack is a battery module or a battery packet.

The battery module includes multiple batteries, and the battery module may further include an end plate and a side plate. The end plate and the side plate are used to fix the batteries.

In an embodiment, the battery pack further includes a box. The battery is disposed in the box. The protruding portion 21 is located between the battery case 10 and a bottom portion of the box or the protruding portion 21 is located between the battery case 10 and a top portion of the box, so that after the battery case 10 bursts open, gas is sprayed toward the bottom portion or the top portion of the box, thereby reducing the probability of gas spraying toward adjacent batteries, so as to improve the safe use performance of the battery pack.

It should be noted that the batteries may be disposed in the box after forming the battery module, and the batteries may be fixed through the end plate and the side plate. The batteries may be directly disposed in the box, that is, there is no need to group the batteries. At this time, the end plate and the side plate may be removed.

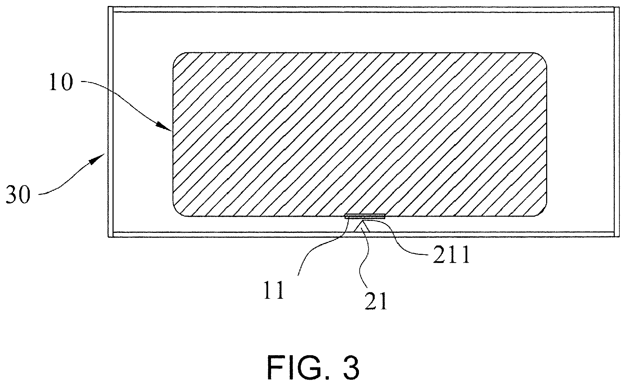

An embodiment of the disclosure also provides a battery pack. Please refer to FIG. 3. The battery pack includes a battery. The battery includes the battery case 10, the battery case 10 being provided with the weak portion 11; and an external structure, the external structure being provided with the protruding portion 21, such that when the battery swells, the protruding portion 21 contacts the weak portion 11, so that the battery case 10 bursts open from the weak portion 11.

The battery pack of an embodiment of the disclosure includes the battery and the external structure. The battery case 10 is provided with the weak portion 11, and the external structure is provided with the protruding portion 21, such that when the battery swells, the protruding portion 21 can contact the battery case 10 and deform the battery case 10, thereby causing the battery case 10 to burst open to release the internal gas of the battery case 10, thereby implementing the pressure release of the battery in time, so as to improve the safe use performance of the battery pack.

It should be noted that the batteries form the battery pack after being grouped. The battery pack may include the batteries. The external structure may be a structure that cooperates with the battery. For example, the external structure may be a box, a side plate, an end plate, a harness board, a circuit board, etc.

As shown in FIG. 3, the battery may be disposed in the box 30. A bottom portion of the box 30 may be provided with the protruding portion 21. When the battery experiences thermal runaway, the protruding portion 21 pierces the weak portion 11, so that the battery case 10 bursts open in time, thereby implementing the efficient pressure release of the battery. FIG. 3 only shows that the battery is located in the box 30, but does not mean that the battery and the box 30 must have the installation state shown. The protruding portion 21 may also be disposed on a top portion of the box 30 or the protruding portion 21 may also be disposed on a side portion of the box 30. The box 30 may be provided with multiple protruding portions 21, so as to correspond to the batteries.

The battery pack may be a battery module. The battery module may include a side plate and an end plate. The side plate and the end plate may fix the batteries, and the side plate or the end plate may be provided with the protruding portion 21. For example, the side plate may be provided with multiple protruding portions 21, so as to correspond to the batteries.

The harness board may be used to implement series or parallel connection between the batteries, and the harness board is provided with the protruding portion 21, so as to correspond to the battery. The harness board may be provided with multiple protruding portions 21, so as to correspond to the batteries.

The circuit board may be used to obtain a temperature signal or a voltage signal of the battery, and the circuit board is provided with the protruding portion 21, so as to correspond to the battery. The circuit board may be provided with multiple protruding portions 21, so as to correspond to the batteries.

It should be noted that the batteries may be disposed in the box after forming the battery module, and the batteries may be fixed through the end plate and the side plate. The batteries may be directly disposed in the box, that is, there is no need to group the batteries. At this time, the end plate and the side plate may be removed.

In an embodiment, the protruding portion 21 includes the free end 211 away from the external structure. The free end 211 can contact the weak portion 11 and can pierce the weak portion 11, wherein at least part of the protruding portion 21 is a shrunken section. The shrunken section gradually shrinks from the side away from the free end 211 toward the free end 211, so that the free end 211 forms the relatively sharp end portion. When the internal pressure of the battery case 10 reaches a certain level, the free end 211 can pierce the weak portion 11 in time, thereby implementing the discharge of gas in time.

It should be noted that in the embodiment, the battery included in the battery pack may be the battery. Other structures of the battery are not described here, and reference may be made to the relevant structure of the battery. For example, the weak portion 11 here may be a structure integrally formed with the battery case 10 or the weak portion 11 may be the explosion-proof valve, etc. in the related art.

Other embodiments of the disclosure will be apparent to those skilled in the art from consideration of the specification and practice of the disclosure disclosed herein. The disclosure is intended to cover any variations, uses or adaptations of the disclosure. These variations, uses, or adaptations follow the general principles of the disclosure and include common general knowledge or conventional technical means in the art that are not disclosed in the present disclosure.

## Claims

1. A battery, comprising:
a battery case (10);
a fixed structure (20), the fixed structure (20) being disposed on an outer side of the battery case (10), wherein a side of the fixed structure (20) facing the battery case (10) is provided with a protruding portion (21), such that when the battery swells, the protruding portion (21) contacts the battery case (10), so that the battery case (10) releases internal gas.

2. The battery according to claim 1, wherein at least part of the fixed structure (20) is an insulating member.

3. The battery according to claim 1, wherein the battery case (10) is provided with a weak portion (11), the protruding portion (21) is disposed facing the weak portion, so that the protruding portion (21) contacts the weak portion, and the battery case (10) bursts open from the weak portion.

4. The battery according to claim 3, wherein the protruding portion (21) comprises a free end (211) away from the fixed structure (20), the free end (211) contacts the weak portion and pierces the weak portion.

5. The battery according to claim 4, wherein at least part of the protruding portion (21) is a shrunken section, the shrunken section gradually shrinks from a side away from the free end (211) toward the free end (211).

6. The battery according to claim 1, wherein a minimum distance between the protruding portion (21) and the battery case (10) is not greater than 10 mm.

7. The battery according to any one of claims 1-6, wherein the protruding portion (21) is disposed facing a corner region of the battery case (10).

8. The battery according to claim 7, wherein at least part of a thickness of the battery case (10) at the corner region is less than a thickness of the battery case (10) other than the corner region.

9. The battery according to any one of claims 1-6, wherein the fixed structure (20) is an insulating cover, the fixed structure (20) comprises an accommodating cavity (22), the protruding portion (21) is located in the accommodating cavity (22), one end of the battery case (10) is located in the accommodating cavity (22).

10. The battery according to claim 9, wherein the fixed structure (20) further comprises a flow channel (23), the flow channel (23) is communicated with the accommodating cavity (22), the flow channel (23) is used to release gas discharged from the battery case (10).

11. The battery according to any one of claims 1-6, wherein a thickness of the battery case (10) is not greater than 0.5 mm.

12. A battery pack, comprising the battery according to any one of claims 1-11.

13. The battery pack according to claim 12, wherein the battery pack further comprises a box, the battery is disposed in the box, the protruding portion (21) is located between the battery case (10) and a bottom portion of the box or the protruding portion (21) is located between the battery case (10) and a top portion of the box.

14. A battery pack, comprising:
a battery, the battery comprising a battery case (10), the battery case (10) being provided with a weak portion;
an external structure, the external structure being provided with a protruding portion (21), such that when the battery swells, the protruding portion (21) contacts the weak portion and causes the battery case (10) to burst open from the weak portion.
